# EUROPEAN PATENT APPLICATION

(11) **EP 1 926 106 A1**
(43) Date of publication of application: **28.05.2008**
(21) Application number: 06024543.8
(22) Date of filing: 27.11.2006
(51) Int. Cl.: G11B 33/04, B65D 85/57

(54) **Medium protector**

(71) Applicant: Huang, Jin, Tao Yuan District Ninghai Zhejiang (CN)
(72) Inventor: Watanabe, Masato c/o Ningbo Aiven On Stationery Co., Ltd., Zhejiang Province, 315600 (CN)
(74) Representative: DTS München

(57) **Abstract**

A medium protector is provided for protecting a recording surface of a recording medium from scratches and other external contamination when the recording medium is not in use. In one embodiment, the medium protector has approximately the same size and shape as the recording surface of the recording medium. An adhesive surface of the medium protector has a detachable adhesive applied thereon and covers the recording surface of the recording medium.

The medium protector can be made of a material such as paper, polyethylene terephthalate, polyvinyl chloride, etc. Another surface of the medium protector may include an adhesive mechanism such as one or more strips of two-sided adhesive tape so that the medium protector can attach the recording medium partially to the surface of another object, such as a page in a book.

## Description

### FIELD OF THE INVENTION

The present invention relates to protection of recording media, and more specifically the recording surface of the recording media.

### BACKGROUND

Conventionally, the recording surface of a recording medium such as a compact disc ("CD") is protected from damage and scratches by storing the recording medium in a hard-shelled case or in a book. In the latter case, a page of the book usually contains a concave portion for holding the recording medium in place. A sheet often covers the concave portion. The covers of the book usually need to be made of a material that is difficult to deform. However, such a book often fails to hold the recording medium firmly in place. For example, a CD may easily slide off the concave portion. Even more often, a user may not desire a hard-shelled case or a book to protect a recording medium since either of them can take up more space than the user is willing to provide. Furthermore, compared to the cost of producing a recording medium that has been declining in response to the advancement of the technologies for producing a recording medium, the cost of producing a hard-shelled case or a book for protecting the recording medium seems to be disproportionately large. Therefore, it is desirable to provide a means for protecting the recording surface of a recording medium that is convenient to use and cost-effective.

While specific disadvantages of existing systems have been described in this Background section, those skilled in the art and others will recognize that the subject matter claimed herein is not limited to specific implementations that solve the described disadvantages.

### SUMMARY

This summary is provided to introduce a selection of concepts in a simplified form that are further described below in the Detailed Description. This summary is not intended to identify key features of the claimed subject matter, nor is it intended to limit the scope of the claimed subject matter.

Embodiments of the invention provide a medium protector for use with recording media, such as CDs, that is convenient to use and cost-effective. One aspect of the invention provides a layered object that includes a recording medium such as a CD and a medium protector covering a recording surface of the recording medium. In one embodiment, the medium protector has approximately the same size and shape as the recording surface of the recording medium. The medium protector includes an adhesive surface that has a detachable adhesive applied thereon so that the medium protector can adhere to the recording surface of the recording medium. Preferably, an area of the outer edge of the adhesive surface of the medium protector is free of the detachable adhesive, so that the medium protector can be easily separated from the recording surface of the recording medium. Alternatively, the medium protector may have a protruding piece on the outer edge of the medium protector for handling the separation of the medium protector from the recording surface of the recording medium. The medium protector can be made of a material such as paper, polyethylene terephthalate, polyvinyl chloride, etc.

In addition, another surface of the medium protector may include an adhesive mechanism so that the layered object may be partially attached to the surface of another object, such as a page in a book. The adhesive mechanism may cover only a small area of the medium protector. For example, the small-area adhesive mechanism may include one or more two-sided adhesive tapes. The book may include one or more pages, wherein each page may be attached with one or more of the layered objects described above. Consequently, aspects of the invention provide a medium protector that is easy to use and inexpensive to produce.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
- FIGURE 1: is a schematic perspective view of an exemplary medium protector in a state before attachment to an exemplary recording medium, according to one embodiment of the invention;
- FIGURE 2: is a schematic perspective view of a medium protector collection including layers of medium protectors shown in FIGURE 1;
- FIGURE 3: is a schematic perspective view of the medium protector shown in FIGURE 1, illustrating an exemplary adhesive surface of the medium protector;
- FIGURE 4: is a schematic view of another exemplary medium protector in a state before attachment to the recording medium, according to another embodiment of the invention;
- FIGURE 5: is a schematic perspective view of the medium protector shown in FIGURE 4 in a state after attachment to the recording medium;
- FIGURE 6: is a schematic perspective view of a medium protector collection including layers of medium protectors shown in FIGURE 4;
- FIGURE 7: is a schematic perspective view of the medium protector shown in FIGURE 4 that has been attached to the recording medium but before being attached to a book; and
- FIGURE 8: is a schematic perspective view of the medium protector shown in FIGURE 1 that has been attached to the recording medium and to the book.

### DETAILED DESCRIPTION

One aspect of the present invention provides a layered object including a recording medium and a medium protector covering the recording medium. In one embodiment, the medium protector has approximately the same size and shape of a recording surface of the recording medium. The medium protector includes an adhesive surface that is applied with a detachable adhesive so that the medium protector may adhere to the recording surface of the recording medium. The adhesive surface of the medium protector may also include a portion that is not applied with the detachable adhesive to allow easy separation of the medium protector from the recording surface of the recording medium. Alternatively, or in addition, an outer edge of the medium protector may include a protruding piece used for handling the separation of the medium protector from the recording surface of the recording medium. The medium protector may be constructed of any suitable material, including paper, polyethylene terephthalate, polyvinyl chloride, etc.

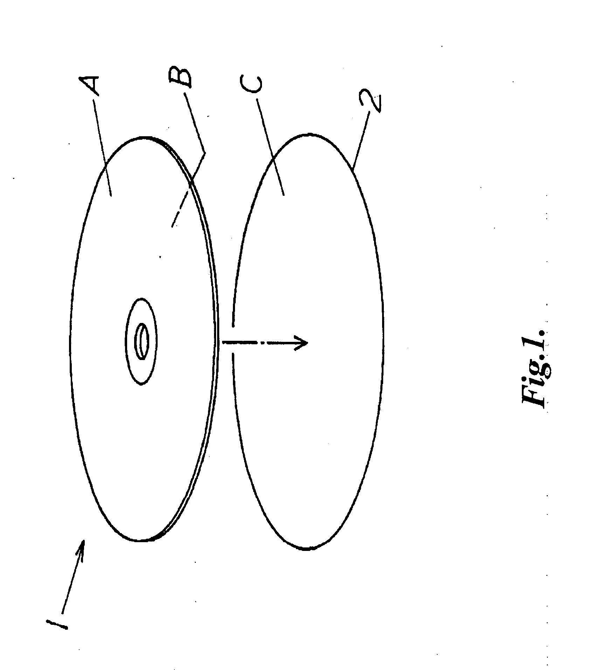

FIGURES 1-8 depict a recording medium 1 and a medium protector 2 that, in one embodiment, are of circular shape. In practice, the shape and size of the recording medium 1 and of the medium protector 2 can vary. Preferably, the shape and size of the medium protector 2 is approximately the same as the shape and size of a recording surface of the recording medium 1. For example, FIGURE 1 illustrates an exemplary layered object that includes a circular recording medium 1 and a circular medium protector 2. As shown in FIGURE 1, the shape and the size of the circular medium protector 2 is approximately the same as the shape and size of the circular recording medium 1.

As shown in FIGURE 1, the exemplary recording medium 1 includes a surface that is a disc plate A. The recording medium 1 also includes a recording surface B. Usually, the recording surface B of the recording medium 1 is vulnerable to external contamination such as scratches, fingerprints, or greases. For example, if the recording medium 1 is a CD, then the recording surface B may be a surface that is deposited with a layer of aluminum substratum. The aluminum substratum of the recording surface B of a CD is vulnerable to oxidation. Thus the recording surface B of the recording medium should be handled carefully and be protected from unwanted external contamination. The medium protector 2 provided by embodiments of the invention insulates the recording surface B of the recording medium 1 from unwanted external contamination.

In exemplary embodiments of the invention, the medium protector 2 is a sheet that has approximately the same size and shape as the recording surface B of the recording medium 1. In embodiments of the invention, the medium protector 2 can be made of a material such as paper, polyethylene terephthalate ("PET"), polyvinyl chloride ("PVC"), etc. As known by those of ordinary skill in the art, PET is a type of linear polyester and is a recyclable plastic material, and polyvinyl chloride is a flame retardant jacketing material providing good mechanical protection, flexibility, and abrasion resistance.

In embodiments of the invention, portion C of the medium protector 2 is applied with detachable adhesive so that the adhesive surface of the medium protector 2 can adhere to the recording surface B of the recording medium 1. The detachable adhesive enables the medium protector 2 to be easily detached from the recording surface B of the recording medium. In an exemplary embodiment of the invention, the medium protector 2 adheres to and covers the entirety of the recording surface B of the recording medium 1.

As a result, in embodiments of this invention, when the recording medium 1 is not being used, the recording surface B of the recording medium 1 can be protected by covering the recording surface B with the medium protector 2. In embodiments of the invention, the detachable adhesive applied to the adhesive surface of the medium protector 2 enables the medium protector 2 to be attached and removed from the recording surface B of the recording medium 1 repeatedly without affecting the quality of the recording surface B.

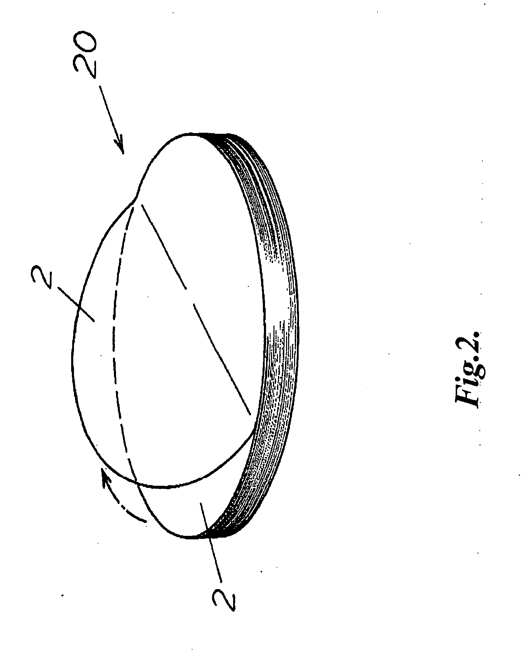

FIGURE 2 illustrates a medium protector collection 20 that includes layers of medium protectors 2, each of which is applied with a detachable adhesive. Each medium protector 2 in the medium protector collection 20 is approximately the same size and shape of the recording surface B of the recording medium 1. Thus, the medium protector collection 20 can be used conveniently for multiple copies of recording medium 1. The detachable adhesive on each medium protector 2 enables each medium protector 2 in the medium protector collection 20 to adhere to each other. To use a medium protector 2, a user simply peels the medium protector 2 from the medium protector collection 20 and applies the medium protector 2 to the recording surface B of the recording medium 1. Thus, the medium protector 2 is easy to use and to be carried around.

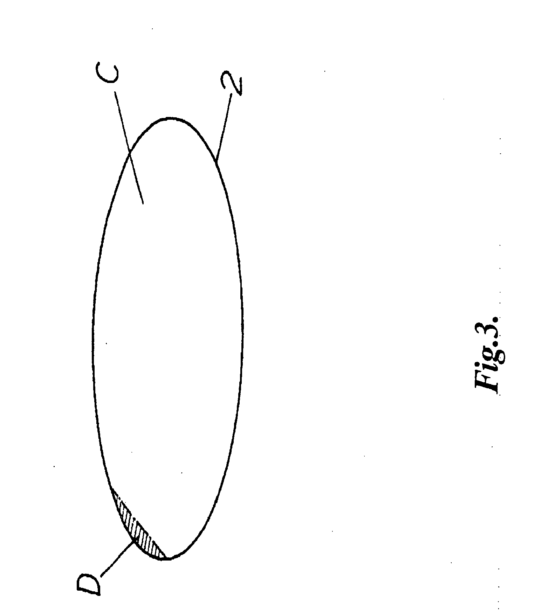

To further enhance the usability of the medium protector 2, some embodiments of the invention apply no detachable adhesive to an area near the outer edge of the adhesive surface of the medium protector 2. For example, as shown in FIGURE 3, on the adhesive surface of the medium protector 2, portion C is applied with the detachable adhesive while portion D (the section shown with the hatching) is not. Consequently, a user can use the portion D to pull the medium protector 2 back from the recording surface B of the recording medium 1 or to separate the medium protector 2 from the medium protector collection 20.

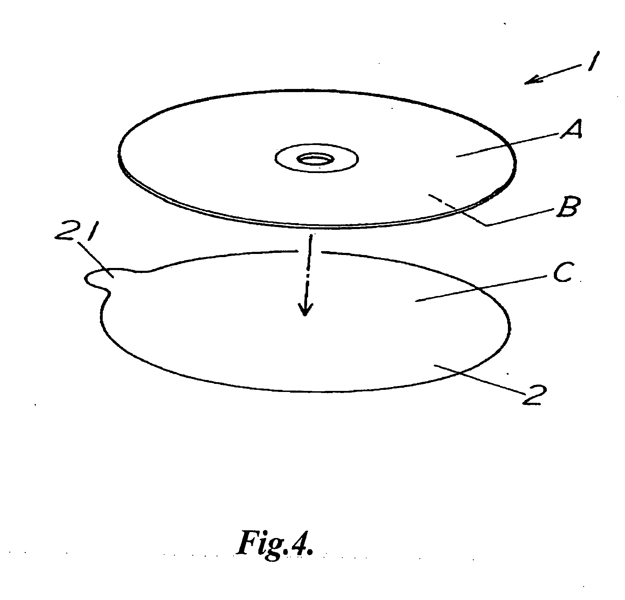

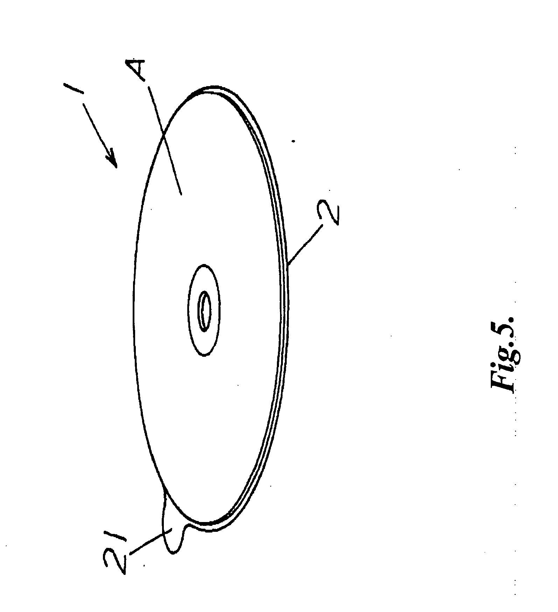

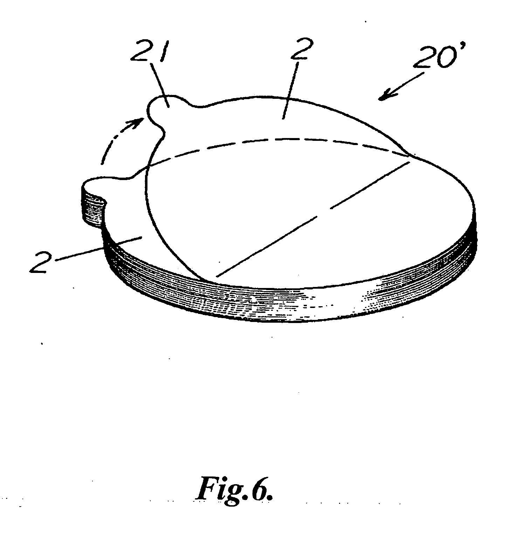

In some embodiments of the invention, as shown in FIGURES 4 and 5, the outer edge of the medium protector 2 includes a protruding piece 21. The protruding piece 21 is not applied with the detachable adhesive. The protruding piece 21 enables a user to easily attach the medium protector 2 to or remove it from the recording surface B of the recording medium 1. FIGURE 6 shows a corresponding medium protector collection 20' that includes layers of medium protectors 2, each of which contain the protruding piece 21. Consequently, the protruding piece 21 can be pulled back to easily separate the medium protector 2 from the recording surface B of the recording medium 1 or from the medium protector collection 20'.

In addition, another surface of the medium protector 2, such as the surface opposite to the adhesive surface of the medium protector 2, may further include an adhesive mechanism. The adhesive mechanism can be one or more strips of two-sided adhesive tape, for example. The adhesive mechanism on another surface of the medium protector 2 can be used to partially attach the recording medium 1 that is covered by the medium protector 2 to another object. For example, some embodiments of the invention further provide a book comprising one or more pages, wherein each page can be associated with one or more recording media such as the recording medium 1.

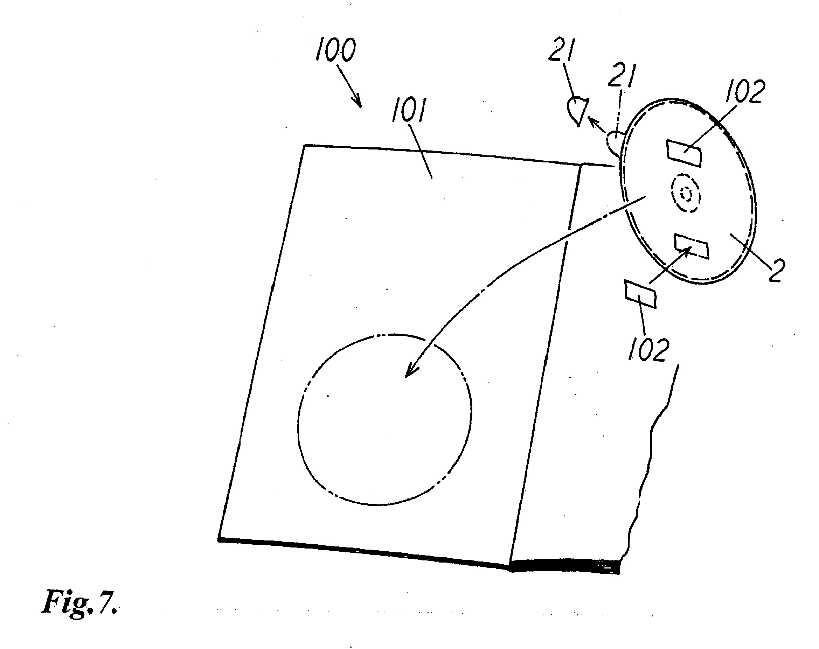

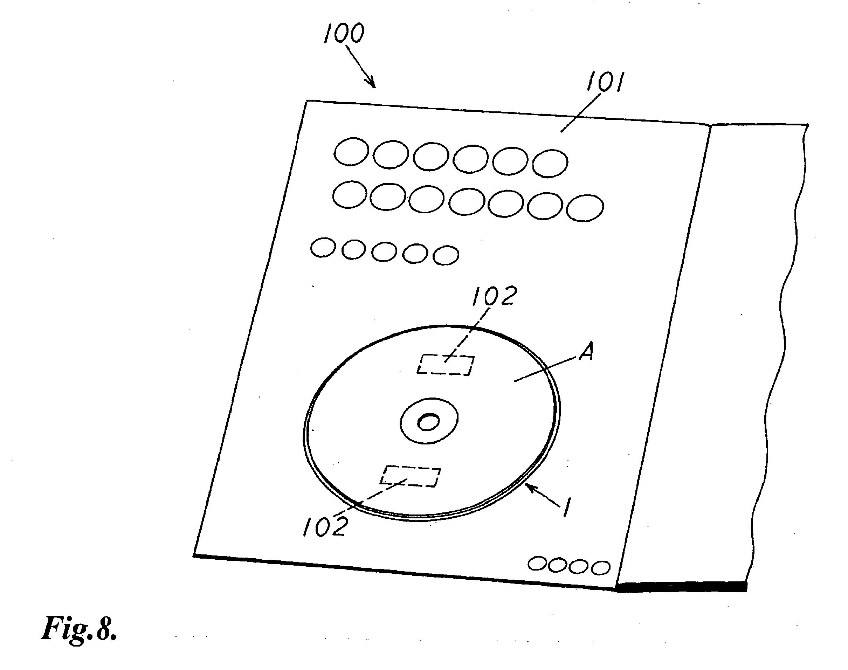

FIGURES 7 and 8 illustrate an exemplary book 100 that contains one or more pages such as a page 101. Each page 101 may host one or more recording media 1, each of which is covered with the medium protector 2. The adhesive surface of the medium protector 2 adheres to the recording surface B of the recording medium 1. The non-adhesive surface of the medium protector 2 includes an adhesive mechanism, such as one or more strips of two-sided tape 102. As shown in FIGURE 8, the recording medium 1 can thus adhere partially to the page 101 through the one or more strips of two-sided tape 102.

Preferably, the adhesive mechanism only covers a small portion of the another surface of the medium protector 2. Thus, the recording medium 1 that is covered by the medium protector 2 can be removed from the page 101, while the medium protector 2 remains on the recording medium 1. In exemplary embodiments of the invention, when the recording medium 1 is separated from the page 101, the recording medium 1 is separated from the one or more strips of two-sided tape 102 while the medium protector 2 remains on the recording surface B of the recording medium 1. As a result, the recording medium 1 is still well protected by the medium protector 2. Further, because the recording medium 1 is partially attached to the page 101 in the book 100 through an adhesive mechanism such as one or more strips of two-sided tape 102, the recording medium 1 can be securely stored in the book 100, without easily sliding off the page 101. Consequently, the recording medium 1 cannot be easily removed from the book 100. Thus, for example, in-store sales thefts of the recording medium 1 can be reduced.

While exemplary embodiments of the invention have been illustrated and described above, it will be appreciated that various changes can be made therein without departing from the spirit and scope of the invention. The scope of the invention should be determined from the following claims and equivalents thereto.

While illustrative embodiments have been illustrated and described, it will be appreciated that various changes can be made therein without departing from the spirit and scope of the invention.

## Claims

1. A medium protector to be applied to a recording surface of a recording medium, **characterized in that**
the medium protector has approximately the same size and shape as the recording surface of the recording medium; and
the medium protector includes an adhesive surface that has a detachable adhesive applied thereto, so that the medium protector can adhere to the recording surface of the recording medium.

2. The medium protector of Claim 1, wherein an area on an outer edge of the adhesive surface of the medium protector is free of the detachable adhesive.

3. The medium protector of Claim 1, wherein an outer edge of the medium protector includes a protruding piece, wherein no adhesive material is applied to the protruding piece.

4. The medium protector of Claim 1, wherein the medium protector is made of a material selected from a group consisting of paper, polyethylene terephthalate, and polyvinyl chloride.

5. The medium protector of Claim 1, wherein the medium protector includes another surface containing an adhesive mechanism for partially adhering the recording medium covered by the medium protector to another object.

6. The medium protector of Claim 5, wherein the adhesive mechanism includes a strip of two-sided adhesive tape.

7. A layered object, comprising:
a recording medium including a recording surface; and
a medium protector that has approximately the same size and shape as the recording surface of the recording
medium, wherein the medium protector includes an adhesive surface to which a detachable adhesive is applied, and wherein the adhesive surface of the medium protector can be detachably and repeatedly applied to the recording surface of the recording medium.

8. The layered object of Claim 7, wherein an area on an outer edge of the adhesive surface of the medium protector is free of the detachable adhesive.

9. The layered object of Claim 7, wherein an outer edge of the medium protector includes a protruding piece, wherein no adhesive material is applied to the protruding piece.

10. The layered object of Claim 7, wherein the medium protector is made of a material selected from a group consisting of paper, polyethylene terephthalate, and polyvinyl chloride.

11. The layered object of Claim 7, wherein the medium protector includes another surface containing an adhesive mechanism for partially adhering the layered object to another object.

12. The layered object of Claim 11, wherein the adhesive mechanism includes a strip of two-sided adhesive tape.

13. The layered object of Claim 7, wherein the recording medium is a compact disc.

14. A book, comprising:
one or more pages associated with one or more layered objects, wherein each layered object comprises:
a recording medium including a recording surface; and
a medium protector that has approximately the same size and shape as the recording surface of the recording medium, wherein the medium protector includes an adhesive surface to which a detachable adhesive is applied, and wherein the adhesive surface of the medium protector can be detachably and repeatedly applied to the recording surface of the recording medium.

15. The book of Claim 14, wherein an area on an outer edge of the adhesive surface of the medium protector is free of the detachable adhesive.

16. The book of Claim 14, wherein an outer edge of the medium protector includes a protruding piece, wherein no adhesive material is applied to the protruding piece.

17. The book of Claim 14, wherein the medium protector is made of a material selected from a group consisting of paper, polyethylene terephthalate, and polyvinyl chloride.

18. The book of Claim 14, wherein the medium protector includes another surface containing an adhesive mechanism for partially adhering the layered object to the page.

19. The book of Claim 18, wherein the adhesive mechanism is a strip of two-sided adhesive tape.

20. The book of Claim 14, wherein the recording medium is a compact disc.
